(19) Europäisches Patentamt

European Patent Office

Office européen des brevets

(11) Veröffentlichungsnummer: **0 532 569 B1**

(12) **EUROPÄISCHE PATENTSCHRIFT**

(45) Veröffentlichungstag der Patentschrift: **02.11.94**

(21) Anmeldenummer: **91910290.5**

(22) Anmeldetag: **31.05.91**

(86) Internationale Anmeldenummer:
**PCT/EP91/01011**

(87) Internationale Veröffentlichungsnummer:
**WO 91/18952 (12.12.91 91/28)**

(51) Int. Cl.⁵: **C09D 5/44**, C08G 18/80,
C08G 18/10, C08G 18/28

(54) **VERFAHREN ZUM BESCHICHTEN ELEKTRISCH LEITFÄHIGER SUBSTRATE, WÄSSRIGE LACKE UND BLOCKIERTE NCO-GRUPPEN ENTHALTENDE VERNETZUNGSMITTEL.**

(30) Priorität: **06.06.90 DE 4018087**

(43) Veröffentlichungstag der Anmeldung:
**24.03.93 Patentblatt 93/12**

(45) Bekanntmachung des Hinweises auf die
Patenterteilung:
**02.11.94 Patentblatt 94/44**

(84) Benannte Vertragsstaaten:
**AT BE CH DE DK ES FR GB IT LI NL SE**

(56) Entgegenhaltungen:
**EP-A- 0 083 232**
**FR-A- 2 449 736**

(73) Patentinhaber: **BASF Lacke + Farben AG**
**Glasuritstrasse 1**
**D-48165 Münster-Hiltrup (DE)**

(72) Erfinder: **OTT, Günther, Dr.**
**Von-Holte-Strasse 101a**
**D-4400 Münster (DE)**
Erfinder: **HEIMANN, Ulrich, Dr.**
**Schlagholz 28**
**D-4400 Münster (DE)**
Erfinder: **JOUCK, Walter, Dr.**
**Brandhoveweg 134**
**D-4400 Münster (DE)**
Erfinder: **REITER, Udo, Dr.**
**Regerstrasse 22**
**D-4404 Telgte (DE)**
Erfinder: **SANTURE, David, J. Dr.**
**43650 Nine Mile Road**
**Novi, Michigan 48375 (US)**

(74) Vertreter: **Münch, Volker, Dr.**
**BASF Lacke + Farben AG**
**Patente/Lizenzen/Dokumentation**
**Postfach 61 23**
**D-48136 Münster (DE)**

**Beschreibung**

Die Erfindung betrifft ein Verfahren zum Beschichten elektrisch leitfähiger Substrate, bei dem

(1) das elektrisch leitfähige Substrat in einen wäßrigen Elektrotauchlack getaucht wird

(2) das Substrat als Kathode geschaltet wird

(3) durch Gleichstrom ein Film auf dem Substrat abgeschieden wird

(4) das beschichtete Substrat aus dem Elektrotauchlack entfernt wird und

(5) der abgeschiedene Lackfilm eingebrannt wird.

Die Erfindung betrifft auch wäßrige Lacke und blockierte NCO-Gruppen enthaltende Vernetzungsmittel.

Das oben beschriebene kathodische Elektrotauchlackierverfahren ist bekannt (vgl. z.B. DE-OS-35 18 732, DE-OS-35 18 770, EP-A-4090, EP-A-12 463 und EP-A-262 069) und wird insbesondere zur Grundierung von Fahrzeug-, insbesondere Automobilkarosserien eingesetzt.

Mit Hilfe des kathodischen Elektrotauchlackierverfahrens können - insbesondere bei Verwendung von Elektrotauchlacken, die kationische, aminmodifizierte Epoxidharze als Bindemittel enthalten - qualitativ hervorragende Lackierungen erhalten werden.

Die zur Durchführung des kathodischen Elektrotauchlackierverfahrens eingesetzten Elektrotauchlacke enthalten vorzugsweise blockierte Polyisocyanate als Vernetzungsmittel. Es ist bekannt, daß bei Verwendung von blockiertem Diphenylmethan-4,4'-diisocyanat (MDI) als Vernetzungsmittel die bei der Verwendung anderer aromatischer Polyisocyanate beobachtete störende Verfärbung ("yellowing") von Decklackschichten nicht auftritt. MDI kann aber nicht ohne weiteres eingesetzt werden, weil es eine starke Kristallisationsneigung zeigt und dadurch zur Destabilisierung der Elektrotauchlacke führt. In der EP-A-236 050 wird beschrieben, daß mit MDI, das mindestens 5 Gew.-% 2,4'-Isomer enthält, stabile Elektrotauchlacke erhältlich sein sollen. Im Handel erhältliche MDI-Typen, die dieser Bedingung entsprechen, weisen jedoch in der Regel nachteiligerweise einen hohen Gehalt an hydrolysierbarem Chlor auf, was zu Elektrotauchlacken mit hohen Chloridionengehalten, d. h. zu Elektrotauchlacken mit erhöhter Korrosivität führt. In der EP-A-293 088 wird beschrieben, daß mit MDI, das ein Uretonimin enthält, stabile Elektrotauchlacke erhältlich sein sollen. Dieser Vorschlag zur Lösung des Kristallisationsproblems führt aber nachteiligerweise nicht in allen Fällen zum Erfolg. Nicht zuletzt sollten die in der EP-A-236 050 und EP-A-293 088 beschriebenen Elektrotauchlacke hinsichtlich Einbrenntemperaturen und Verlaufseingeschaften verbessert werden. Außerdem ist es wünschenswert, ein Verfahren zur Erniedrigung der Viskosität von MDI-Vernetzungsmitteln bereitzustellen, weil damit die Viskosität der Elektrotauchlacke erniedrigt und die Schichtdicke der erhaltenen Lackfilme erhöht werden kann.

Die der vorliegenden Erfindung zugrundeliegende Aufgabenstellung liegt in der Bereitstellung von Vernetzungsmitteln für wäßrige Elektrotauchlacke, bei deren Verwendung stabile Elektrotauchlacke erhalten werden, die gegenüber vergleichbaren Elektrotauchlacken des Standes der Technik verbesserte Eigenschaften aufweisen.

Diese Aufgabe wird überraschenderweise durch die Bereitstellung von blockierten Polyisocyanaten gelöst, die erhältlich sind, indem

(I) in einer ersten Stufe

(a) Diphenylmethandiisocyanat und

(b) ein Monoalkohol oder eine Mischung aus Monoalkoholen

zu einem isocyanatgruppenhaltigen Zwischenprodukt (A) umgesetzt werden und dieses Zwischenprodukt (A)

(II) in einer zweiten Stufe mit

(c) einem Polyol oder einer Mischung aus Polyolen zu einem hydroxylgruppenhaltigen Zwischenprodukt (B) umgesetzt wird, das

(III) in einer dritten Stufe entweder mit

(d) einem cycloaliphatischen, aliphatischen oder araliphatischen Polyisocyanat oder einem Gemisch aus solchen Polyisocyanaten und

(e) einem monofunktionellen Blockierungsmittel oder einem Gemisch solcher Blockierungsmittel oder mit

(f) einem aus (d) und (e) hergestellten teilblockierten Polyisocyanat

zu einem isocyanatgruppenfreien Vernetzungsmittel umgesetzt wird.

Mit den erfindungsgemäßen Vernetzungsmitteln können stabile Elektrotauchlacke mit niedrigen Chloridionengehalten hergestellt werden. Bei Verwendung von Elektrotauchlacken, die die erfindungsmgemäßen Vernetzungsmittel enthalten, treten keine störenden Verfärbungen von Decklackschichten auf. Elektrotauchlacke, die anstelle der in der EP-A-236 050 und EP-A-293 088 beschriebenen Vernetzungsmittel die erfindungsgemäßen Vernetzungsmittel enthalten, können bei niedrigeren Einbrenntemperaturen eingebrannt werden und zeigen bessere Verlaufseigenschaften. Außerdem zeichnen sich die erfindungsgemäßen Vernetzungsmittel im Verhältnis zu vergleichbaren Vernetzungsmitteln, die unter alleiniger Verwendung von MDI als Polyisocyanatkomponente hergestellt worden sind, durch niedrigere Viskositäten aus.

Als Komponente (a) werden MDI-Qualitäten eingesetzt, die einen niedrigen bzw. keinen Gehalt an hydrolysierbarem Chlor enthalten.

Als Komponente (a) können selbstverständlich auch MDI-Qualitäten mit höherem Gehalt an hydrolysierbarem Chlor eingesetzt werden. Dann besteht jedoch die Gefahr, daß Elektrotauchlacke erhalten werden, die aufgrund einer zu hohen Chloridionenkonzentration Korrosionsvorgänge an den Lackieranlagen verursachen.

Als Komponente (b) können beispielsweise lineare, gegebenenfalls verzweigte aliphatische Monoalkohole mit 1 bis 12 C-Atomen im Molekül oder Mischungen aus solchen Monoalkoholen eingesetzt werden. Als Beispiele für derartige Monoalkohole werden genannt: Methanol, Ethanol, Propanol, Trimethylolpropandiallylether, Butanol, Pentanol, Pentaerythrittriallylether, Hexanol, Heptanol, Isodecanol und 2-Ethylhexanol. Es können auch Glykolether der allgemeinen Formel $CH_3(CH_2)_n$-0-$(CH_2$-$CH_2$-0-$)_m$H oder Mischungen aus derartigen Glykolethern als Komponente (b) eingesetzt werden. In der allgemeinen Formel steht n für eine ganze Zahl von 0 bis 5, vorzugsweise 2 bis 5 und m für eine ganze Zahl von 1 bis 3, vorzugsweise 1 oder 2. Als Beispiele für einsetzbare Glykolether werden Propylglykol, Propyldiglykol, Butylglykol und Butyldiglykol genannt. Als Komponente (b) können auch Propylenglykolether der allgemeinen Formel $CH_3(CH_2)_n$-0-$(CH_2$-$CHCH_3$-0-$)_m$H oder Mischungen aus derartigen Propylenglykolethern eingesetzt werden (n steht für eine ganze Zahl von 0 bis 5 und m steht für eine ganze Zahl von 1 bis 3).

Als Komponente (b) werden vorzugsweise Glykolether oder Mischungen aus Glykolethern der oben beschriebenen allgemeinen Formel $CH_3(CH_2)_n$-0-$(CH_2$-$CH_2$-0-$)_m$H eingesetzt.

Die Umsetzung der Komponenten (a) und (b) kann zweckmäßigerweise bei Temperaturen von 20 bis 80°C durchgeführt werden. Die Umsetzung kann mit Katalysatoren, wie z.B. Dibutylzinndilaurat katalysiert werden.

Es ist bevorzugt, die Komponenten (a) und (b) in einem solchen stöchiometrischen Verhältnis miteinander umzusetzen, daß 30 bis 95, vorzugsweise 50 bis 90 Prozent der NCO-Gruppen der Komponente (a) mit der Komponente (b) umgesetzt, d.h. blockiert werden.

Das aus den Komponenten (a) und (b) erhaltene isocyanatgruppenhaltige Zwischenproukt (A) wird in einer zweiten Stufe mit der Komponente (c) zu einem hydroxylgruppenhaltigen Zwischenprodukt (B) umgesetzt.

Die Umsetzung des Zwischenproduktes (A) mit der Komponente (c) wird zweckmäßigerweise bei Temperaturen von 20 bis 80, vorzugsweise 40 bis 80°C durchgeführt. Die Umsetzung kann in Gegenwart von Katalysatoren, wie z.B. Dibutylzinndilaurat durchgeführt werden. Im allgemeinen ist es günstig, die Umsetzung des Zwischenproduktes (A) mit der Komponente (c) in Gegenwart eines inerten Verdünnungsmittels, wie z.B. Methylisobutylketon, Toluol oder Xylol durchzuführen.

Die Komponete (c) muß mindestens in einer solchen Menge eingesetzt werden, daß alle freien Isocyanatgruppen des Zwischenproduktes (A) mit der Komponente (c) reagieren können und daS daß erhaltene Zwischenprodukt (B) noch freie Hydroxylgruppen aufweist. Es ist bevorzugt, die Komponente (c) in einer solchen Menge einzusetzen, daß pro Äquivalent freie NCO-Gruppen 1,0 bis 2,5, vorzugsweise 1,2 bis 1,8 Äquivalente Hydroxylgruppen eingesetzt werden.

Als Komponente (c) kann im Prinzip jede organische Verbindung eingesetzt werden, die im statistischen Mittel mindestens zwei Hydroxylgruppen pro Molekül enthält. Es können auch Mischungen aus solchen organischen Verbindungen eingesetzt werden. Als Beispiele für einsetzbare Polyole werden lineare, gegebenenfalls verzweigte aliphatische Diole mit 2 bis 12 C-Atomen im Molekül, Poly(ethylenoxid), Poly-(propylenoxid), Poly(ethylenoxid)(propylenoxid) mit zahlenmittleren Molekulargewichten von 100 bis 1000, vorzugsweise 200 bis 400 und lineare, gegebenenfalls verzweigte aliphatische Triole mit 2 bis 12 C-Atomen im Molekül genannt. Geeignete Polyole sind zum Beispiel Ethylenglykol, Propylenglykole, Butandiole, Neopentylglykol, Hexandiole, Dimethylolcyclohexan, Glycerin, Trimethylolethan, Trimethylolpropan, Trimethylolhexan, Pentaerythrit, Dipentaerythrit, Pentaerythritmono- und diallylether und Trimethylolpropanallyether. Als Komponente (c) werden bevorzugt Triole wie z. B. Trimethylolpropan und Glycerin eingesetzt.

In einer dritten Reaktionsstufe wird zumindest ein Teil der im Zwischenprodukt (B) vorhandenen Hydroxylgruppen entweder mit

(d) einem cycloaliphatischen, aliphatischen oder araliphatischen Polyisocyanat oder einem Gemisch aus solchen Polyisocyanaten und

(e) einem monofunktionellen Blockierungsmittel oder einem Gemisch solcher Blockierungsmittel oder mit

(f) einem aus (d) und (e) hergestellten teilblockierten Polyisocyanat

umgesetzt. Die Umsetzung des Zwischenproduktes (B) mit den Komponenten (d) und (e) bzw. (f) wird

3

zweckmäßigerweise bei Temperaturen von 20 bis 100, vorzugsweise 40 bis 80 °C durchgeführt. Die Umsetzung wird vorteilhafterweise in Gegenwart von Katalysatoren, wie Dibutylzinndilaurat durchgeführt. Im allgemeinen ist es günstig, die Umsetzung des Zwischenproduktes (B) mit den Komponenten (d) und (e) bzw. (f) in Gegenwart eines inerten Verdünnungsmittels, wie z.B. Toluol, Xylol oder Methylisobutylketon durchzuführen.

Die Komponente (d) muß mindestens in einer solchen Menge eingesetzt werden, daß mindestens 10 Prozent der im Zwischenprodukt (B) enthaltenen Hydroxylgruppen mit einer Isocyanatgruppe der Komponente (d) umgesetzt werden. Die Komponente (e) sollte mindestens in einer solchen Menge eingesetzt werden, daß im statistischen Mittel nur eine Isocyanatgruppe der Komponente (d) mit einer Hydroxylgruppe des Zwischenproduktes (B) reagieren kann und das Endprodukt isocyanatgruppenfrei ist.

Es ist nicht unbedingt notwendig, daß die dritte Reaktionsstufe erst nach vollständigem Abschluß der zweiten Reaktionsstufe (Herstellung des Zwischenproduktes (B)) durchgeführt wird. Es ist auch möglich, mit der Zugabe der Komponenten (d) und (e) bzw. (f) schon zu einem Zeitpunkt zu beginnen, zu dem noch nicht alle NCO-Gruppen der Komponenten (a) mit der Komponente (c) umgesetzt worden sind. Entscheidend ist, daß wenigstens ein Teil der Komponente (c) sowohl mit NCO-Gruppen der Komponente (a) als auch mit NCO-Gruppen der Komponente (d) bzw. (f) reagiert.

Als Komponente (d) kann im Prinzip jedes cycloaliphatische, aliphatische oder araliphatische Polyisocyanat oder ein Gemisch aus solchen Polyisocyanaten eingesetzt werden. Einsetzbar sind z.B. cycloaliphatische, araliphatische oder aliphatische Polyisocyanate mit 4 bis 25, vorzugsweise 4 bis 16 C-Atomen und 2 bis 4 Isocyanatgruppen pro Molekül. Als Beispiel für einsetzbare Polyisocyanate werden genannt: 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, $\omega,\omega'$-Diisocyanatodipropylether, Cyclobutan-1,3-diisocyanat, Cyclohexan-1,3- und -1,4-diisocanat, 2,2- und 2,6-Diisocyanato-1-methylcyclohexan, 3-Isocyanatomethyl-3,5,5-trimethylcyclohexylisocyanat ("Isophorondiisocyanat"), 1,5-, 2,5-, 1,6- und 2,6-Bis-(isocyanatomethyl)-4,7-methanohexahydroindan,1,5-, 2,5-, 1,6- und 2,6-Bis-(isocyanato)-4,7-methano-hexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat und Xylylendiisocyanat.

Als Komponente (d) werden in der Regel die technisch leicht zugänglichen aliphatischen und cycloaliphatischen Polyisocyanate eingesetzt, insbesondere Hexamethylendiisocyanat, 4,4'-Di-(isocyanatocyclohexyl)methan und Isophorondiisocyanat. Als Komponente (d) wird besonders bevorzugt das Isocyanurat des Hexamethylendiisocyanats-1,6 eingesetzt.

Als Komponente (e) können beispielsweise Monoalkohole, Monoamine, Oxime, Acetessigsäurealkylester, Malonsäuredialkylester, Lactame und Phenole oder Mischungen aus derartigen Verbindungen eingesetzt werden. Als Beispiele werden die als Komponente (b) genannten Blockierungsmittel sowie Benzylalkohol, Methylethylketoxim, Acetonoxim, Cyclohexanonoxim, $\epsilon$-Caprolactam, Malonsäurediethylester, Diethanolamin, Dibutylamin, Diisobutylamin, N-Methylethanolamin genannt. Als Komponente (e) werden vorzugsweise sekundäre Monoamine wie z. B. Diethanolamin, Dibutylamin, Diisobutylamin und N-Methylethanolamin und/oder Ketoxime wie Methylethylketoxim, Acetonoxim und Cyclohexanonoxim eingesetzt.

Als Komponente (e) werden besonders bevorzugt Dibutylamin und Methylethylketoxim eingesetzt.

Es ist oft von Vorteil, die erfindungsgemäßen Vernetzungsmittel mit vollblockierten cycloaliphatischen, aliphatischen oder araliphatischen Polyisocyanaten zu vermischen. Das kann z. B. dadurch erreicht werden, daß in der dritten Stufe als Komponente (f) ein teilblockiertes Polyisocyanat mit einem entsprechend hohen Anteil an vollständig blockiertem Polyisocyanat eingesetzt wird.

Die erfindungsgemäßen Vernetzungsmittel können im Prinzip in allen Lacken eingesetzt werden, die ein Bindemittel mit gegenüber NCO-Gruppen reaktiven Gruppen (z.B. Hydroxylgruppen und/oder primäre Aminogruppen und/oder sekundäre Aminogruppen und/oder Thiolgruppen) enthalten. Die erfindungsgemäßen Vernetzungsmittel werden vorzugsweise in anodisch und kathodisch abscheidbaren Elektrotauchlacken eingesetzt.

Anodisch abscheidbare Elektrotauchlacke werden beispielsweise in den US-Patenten US-PS-3,366,563, US-PS-3,369,983, US-PS-3,403,088, US-PS-3,530,054, US-PS 3,565,781 und US-PS-3,772,227 beschrieben.

Besonders bevorzugt werden die erfindungsgemäßen Vernetzungsmittel in kathodisch abscheidbaren Elektrotauchlacken eingesetzt, die als Bindemittel kationische, aminmodifizierte Epoxidharze enthalten. Derartige Elektrotauchlacke sind bekannt und werden beispielsweise in der DE-OS-35 18 770, DE-OS-35 18 732, EP-B-102 501, DE-OS-27 01 002, US-PS-4,104,147, EP-A-4090, EP-A-12 463, US-PS-4,031,050 US-PS 3,922,253, US-PS-4,101,486, US-PS-4,038,232 und US-PS-4,017,438 beschrieben. In diesen Patentdokumenten wird auch die Herstellung der in Rede stehenden kationischen, aminmodifizierten Epoxidharze ausführlich beschrieben.

Unter kationischen, aminmodifizierten Epoxidharzen werden kationische Reaktionsprodukte aus

(α) ggf. modifizierten Polyepoxiden und

(β) Aminen

Verstanden. Diese kationischen, aminmodifizierten Epoxidharze können durch Umsetzung der Komponenten (α) und (β) und - falls notwendig - anschließender Protonierung hergestellt werden. Es ist aber auch möglich, ein unmodifiziertes Polyepoxid mit einem Amin umzusetzen und an dem so erhaltenen aminmodifizierten Epoxidharz weitere Modifizierungen durchzuführen.

Unter Polyepoxiden werden Verbindungen verstanden, die zwei oder mehr Epoxidgruppen im Molekül enthalten.

Besonders bevorzugte (α)-Komponenten sind Verbindungen, die herstellbar sind durch Umsetzung von

(i) einer Diepoxidverbindung oder eines Gemisches von Diepoxidverbindungen mit einem Epoxidäquivalentgewicht unter 2000 mit

(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,

wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190°C, gegebenenfalls in Anwesenheit eines Katalysators durchgeführt wird (vgl. DE-OS-35 18 770).

Weitere besonders bevorzugte (α)-Komponenten sind Verbindungen, die herstellbar sind durch eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS 35 18 732).

Polyepoxide, die zur Herstellung der besonders bevorzugten (α)-Komponenten und auch selbst als (α)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2propan. Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:

- Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

- aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder

- hydroxylgruppenhaltige Verbindungen, wie Neopentylglykol, Bisethoxiliertes Neopentylglykol, Hydroxipivalinsäureneopentylglykolester, Dimethylhydantoin-N,N'-diethanol, Hexandiol-1,6, Hexandiol-2,5, 1,4-Bis-(hydroximethyl)cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methylisobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder

- gesättigte oder ungesättigte Fettsäuremethylester, die in Gegenwart von Natriummethylat mit Hydroxylgruppen der Epoxidharze umgeestert werden.

Als Komponente ($\beta$) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Diemthylaminoethylamin, Diethylaminopropylamin, Dimethylaminopropylamin u. dgl. geeignet. Es können auch ketimingruppenhaltige Amine, wie z.B. das Methylisobutyldiketimin von Diethylentriamin eingesetzt werden. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als ($\beta$)-Komponenten eingesetzt.

Die für die Wasserverdünnbarkeit und elektrische Abscheidung erforderlichen Ladungen können durch Protonierung mit wasserlöslichen Säuren (z.B. Borsäure, Ameisensäure, Milchsäure, bevorzugt Essigsäure) erzeugt werden.

Eine weitere Möglichkeit zur Einführung kationischer Gruppen in die Komponente ($\alpha$) besteht in der Umsetzung von Epoxidgruppen der Komponenten ($\alpha$) mit Aminsalzen. Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird. Als teilblockiertes Polyisocyanat kann auch eine im statistischen Mittel noch eine freie NCO-Gruppe im Molekül aufweisende Vorstufe der erfindungsgemäßen Vernetzungsmittel eingesetzt werden.

Die erfindungsgemäßen Vernetzungsmittel werden in der Regel in einer Menge von 5 bis 60 Gew.-%, vorzugsweise 20 bis 40 Gew.-%, bezogen auf die im Elektrotauchlack enthaltene Menge an kationischem aminmodifiziertem Epoxidharz, eingesetzt.

Neben dem erfindungsgemäßen Vernetzungsmittel und dem kationischen aminmodifizierten Epoxidharz (es kann selbstverständlich auch eine Mischung unterschiedlicher kationischer, aminmodifizierter Epoxidharze eingesetzt werden) können die in Rede stehenden Elektrotauchlacke noch weitere Bestandteile, wie z.B. Pigmente, Weichmacher, Füllstoffe, Netzmittel, organische Lösemittel, Antioxidantien usw. enthalten.

Der Festkörper der Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 6 und 8, vorzugsweise zwischen 6,5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m$^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise 150 bis 180°C über eine Zeitdauer von 15 bis 30 Minuten, eingebrannt.

Als elektrisch leitfähige Substrate können beliebige elektrisch leitfähige Substrate, insbesondere aber Metalle, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

## 1. Herstellung von Vernetzungsmitteln

### 1.1 erfindungsgemäßes Vernetzungsmittel 1

In einem Reaktor mit Rührer, Rückflußkühler und Inertgaszuleitung werden 632 Teile MDI ®Lupranat MM 103, NCO-Äquivalentgewicht 145, Hersteller: BASF AG) und 191 Teile Methylisobutylketon vorgelegt und auf 50°C erwärmt. Man gibt nun 0,2 Teile Dibutylzinndilaurat zu und läßt 450 Teile Butylglykol (MW 118) innerhalb einer Stunde so zulaufen, daß die Innentemperatur bei leichter Gegenkühlung zwischen 50 und 55°C bleibt. Die 85 %ige Lösung des teilverkappten Isocyanats hat ein NCO-Äquivalentgewicht von 1970 (eine Probe dieser Lösung wird nach Abkühlung auf Raumtemperatur kristallin).

Man verdünnt nun bei dieser Temperatur mit 283 Teilen Methylisobutylketon, gibt 25 Teile Glycerin zu und hält 1 Stunde bei 50°C. In der so erhaltenen 70 %igen Lösung des hydroxylgruppenhaltigen Zwischenproduktes (B) sind keine NCO-Gruppen mehr nachweisbar. Die OH-Zahl liegt bei 13,8 mgKOH/g Festkörper (berechneter Wert). (Diese Lösung kommt nach kurzer Zeit bei Raumtemperatur ebenfalls zur Kristallisation).

1581 Teile des hydroxylgruppenhaltigen Zwischenproduktes (B) werden nun bei 50°C mit 606 Teilen trimerisiertem Hexamethylendiisocyanat 1,6 ®Basonat PLR 8638, Hersteller: BASF AG, NCO-Äquivalentgewicht: 185) versetzt. Nach 15 Minuten tropft man innerhalb von 1 Stunde 386 Teile Di-n-butylamin zu und verdünnt anschließend mit 425 Teilen Methylisobutylketon. Man erhält eine klare, flüssige Lösung, die auch nach mehrwöchiger Lagerung nicht kristallisiert.

| Kennzahlen: | Festkörper (1 Std. 130°C): | 71 % |
| --- | --- | --- |
| | Isocyanatgehalt: | 0 |
| | Aminzahl: | 0 |
| | Originalviskosität bei 23°C: (Platte-Kegel-Viskosimeter) | 7,9 dPas |

### 1.2 erfindungsgemäßes Vernetzungsmittel 2

Analog zu dem oben beschriebenen Verfahren wird ein Vernetzungsmittel hergestellt aus:

529 Teilen Lupranat MM 103
184 Teilen Methylisobutylketon
0,2 Teilen Dibutylzinndilaurat
517 Teilen Butyldiglykol (1)
273 Teilen Methylisobutylketon
21 Teilen Glycerin (2)
626 Teilen Basonat PLR 8638
411 Teilen Di-n-butylamin
445 Teilen Methylisobutylketon

(1) Diethylenglykolmonobutylether (MW 162). Das NCO-Äquivalent liegt nach dieser Umsetzung bei 2400.

(2) Nach der Umsetzung des Glycerins ist der NCO-Gehalt 0 und die OH-Zahl beträgt 13,0 mg KOH/g Festkörper.

Man erhält eine klare, niedrigviskose Lösung, die auch nach langer Lagerung nicht kristallisiert. Die Kennzahlen sind:

| Festkörper (1 Std. 130°C): | 70 % |
| --- | --- |
| Isocyanatgehalt: | 0 |
| Aminzahl: | 1 |
| Originalviskosität bei 23°C: (Platte-Kegel-Viskosimeter) | 6,6 dPas |

### 1.3 Vergleichsbeispiel

1.3.1 300 Teile ®Lupranat MM 103 werden zusammen mit 230 Teilen Methylisobutylketon auf 50°C aufgeheizt und mit 0,2 Teilen Dibutylzinndilaurat versetzt. Dann werden 236 Teile Butylglykol innerhalb

EP 0 532 569 B1

von 30 Minuten bei 50 - 55°C zugetropft. Anschließend wird das Reaktionsgemisch noch für 1 Std. bei 50°C gehalten. Der Isocyanatgehalt der 70 %igen Lösung ist danach gleich 0. Schon nach kurzer Lagerzeit fällt das Produkt in kristalliner Form aus der Lösung aus.

1.3.2 Es wird ein Vernetzungsmittel auf Basis eines aliphatischen Polyisocyanats hergestellt, indem 185 Teile ®Basonat PRL 8638 in 78,5 Teilen Methylisobutylketon bei 50°C tropfenweise mit 129 Teilen Di-n-butylamin versetzt werden. 30 Minuten später sind keine Isocyanatgruppen mehr nachweisbar (IR-Spektrum). Die 80 %ige Lösung kommt auch nach mehreren Wochen Lagerung nicht zur Kristallisation.

1.3.3 Man vermengt nun 125 Teile des oben beschriebenen flüssigen Vernetzungsmittel mit 143 Teilen des unter 1.3.1 beschriebenen kristallisierten Vernetzungsmittels und stellt bei 50°C eine homogene, klare Lösung her. Nach einwöchiger Lagerzeit bei Raumtemperatur hat sich eine kristalline Sedimentschicht gebildet.

## 1.4 Vergleichsvernetzungsmittel 1

Gemäß Beispiel 1 der europäischen Patentanmeldung EP-A-0 236 050 wird auf Basis von oligomerenhaltigem Diphenylmethandiisocyanat (Mondur MRS, Mobay Chemical Company) aus folgenden Ingredienzien ein Vernetzungsmittel hergestellt:

1330 Teile Mondur MRS
320 Teile Methanol
707 Teile Methylisobutylketon
1,6 Teile Dibutylzinndilaurat.

Die erhaltene Lösung hat einen Festgehalt von 70 % und bleibt auch bei längerer Lagerzeit bei Raumtemperatur stabil.

## 1.5 Vergleichsvernetzungsmittel 2

Gemäß der europäischen Patentanmeldung EP-A-293 088, Beispiel 1.2 (a) wird ein weiteres Vernetzungsmittel hergestellt. Anstelle von "Suprasec VM 20" (Hersteller ICI) wird jedoch Lupranat MM 103 eingesetzt:

870 Teile Lupranat MM 103
6,42 Teile Dibutylzinndilaurat
486 Teile Butyldiglykol
134 Teile geschmolzenes Trimethylolpropan
600 Teile Ethylglykol

Die resultierende Lösung hat einen Festkörper von 71 % (1 Stunde bei 130°C gemessen). Bei Raumtemperaturlagerung tritt keine Kristallisation ein.

## 1.6 Vergleichsbeispiel

Man verfährt wie unter 1.5 beschrieben, ersetzt jedoch die 486 Teile Butyldiglykol durch eine äquimolare Menge Butylglykol (354 Teile) und verwendet zur Verdünnung 582 Teile Methylisobutylketon anstelle der 600 Teile Ethylglykol.

Die resultierende 70 %ige Lösung kommt schon nach einigen Tagen zur Kristallisation und kann in Kombination mit dem nachfolgend beschriebenen kationischen, aminmodifizierten Epoxidharz in keine gebrauchstüchtige wäßrige Bindemitteldispersion überführt werden.

## 1.7 erfindungsgemäßes Vernetzungsmittel 3

Das Aufbauprinzip dieses Vernetzungsmittels gleicht dem aus Beispiel 1.6, ist aber entsprechend dem Erfindungsgedanken so modifiziert, daß das Produkt nicht mehr kristallisiert:

Analog Punkt 1.6 werden 870 Teile Lupranat MM 103 und 0,3 Teile Dibutylzinndilaurat in 237 Teilen Methylisobutylketon mit 472 Teilen Butylglykol bis zu einem NCO-Äquivalent von 670 umgesetzt und dann mit 134 Teilen geschmolzenem Trimethylolpropan versetzt. Sobald keine Isocyanatgruppen mehr feststellbar sind, verdünnt man mit 396 Teilen Methylisobutylketon auf 70 % Festgehalt. Dieses hydroxylgruppenhaltige Zwischenprodukt hat eine OH-Zahl von 38 mgKOH/g Festkörper. Man gibt nun bei 50°C 1098 Teile Basonat PLR 8638 (NCO-Äquivalentgewicht 183) zu. Nach 10 Minuten werden 645 Teile Di-n-butylamin so zugetropft, daß die Temperatur bei 50 - 65°C bleibt. Anschließend wird mit 747 Teilen Methylisobutylketon verdünnt. Die erhaltene Lösung hat einen Festkörper von 70,5 % (1 Stunde bei 130°C). Auch nach längerer Lagerung kann keine Kristallisation beobachtet werden.

## 2. Herstellung eines kationischen, aminmodifizierten Epoxidharzes

In einem Reaktor werden unter Stickstoffatmosphäre 43,73 Teile eines Epoxidharzes auf Basis Bisphenol A mit einem EEW (Epoxidäquivalentgewicht) von 188, 8,84 Teile Bisphenol A, 10,16 Teile Dodecylphenol und 3,08 Teile Xylol vorgelegt und auf 130°C aufgeheizt. Dann gibt man 0,06 Teile Triphenylphosphin zu, worauf die Temperatur kurzzeitig auf 160°C steigt. Nachdem die Temperatur wieder auf 130°C gefallen ist, gibt man 0,16 Teile N,N-Dimethylaminobenzylamin zu und hält für ca. 2 weitere Stunden bei 130°C, bis das EEW auf 810 gestiegen ist. Unter Kühlung werden nun 3,50 Teile Butylglykol, 5,30 Teile Diethanolamin und 8,13 Teile Xylol zugegeben. Nachdem die Temperatur auf 90°C gefallen ist, wird die Reaktionsmischung noch 1 Stunde bei 90°C gehalten. Sodann kühlt man weiter und gibt 3,50 Teile Propylenglykolphenylether und 11,57 Teile Isobutanol zu. Bei 60°C werden 1,98 Teile N,N-Dimethylaminopropylamin zugegeben. Man hält anschließend noch 2 Stunden bei 60°C, heizt auf 90°C auf und hält noch 1 weitere Stunde bei dieser Temperatur bis die Viskosität der Mischung konstant bleibt und trägt nach kurzer Kühlung aus. Die hellgelbe Lösung hat einen Festkörper von 70,2 % (1 Std. bei 130°C) und eine Viskosität von 2,5 dPas (40 %ige Lösung in Methoxypropanol, bei 23°C am Platte-Kegel-Gerät gemessen). Der Amingehalt liegt bei 1,26 Milliäquivalenten pro g Festharz.

## 3. Herstellung wäßriger Bindemitteldispersionen

Aus den in Tabelle 1 aufgeführten Bestandteilen werden wäßrige Bindemitteldispersionen hergestellt, indem das Harz gemäß Pkt. 2., die Vernetzungsmittel, Milchsäure und die Entschäumerlösung gemischt werden. Dann wird mit der ersten Menge entionisierten Wassers portionsweise verdünnt und anschließend wird mit der zweiten Menge entionisierten Wassers portionsweise verdünnt. Dann wird noch 30 Minuten lang gerührt. Schließlich werden die flüchtigen Lösemittel durch Vakuumdestillation entfernt und mengenmäßig durch entionisiertes Wasser ersetzt.

**Tabelle 1:**

Wäßrige Bindemitteldispersionen (Gewichtsanteile in g)

| Dispersion | 1 | 2 | 3 (Vergleich 1) | 4 (Vergleich 2) | 5 (Vergleich 2) |
|---|---|---|---|---|---|
| Harz gemäß Pkt.2 | 1040 | 1040 | 1040 | 1040 | 1040 |
| Vernetzungsmittel gemäß Pkt. | 1.1 | 1.2 | 1.4 | 1.5 | 1.7 |
| Vernetzungsmittel Menge | 560 | 560 | 560 | 560 | 560 |
| Milchsäure (88 %ig) | 41 | 41 | 41 | 41 | 41 |
| Entschäumer[1] | 2 | 2 | 2 | 2 | 2 |
| ention.-Wasser 1 | 597 | 597 | 597 | 597 | 597 |
| ention.-Wasser 2 | 960 | 960 | 960 | 960 | 960 |
| Festkörper, nach der Destillation bestimmt (1 Std. bei 130°C) | 34,4 % | 35,2 % | 35,5 % | 34,6 % | 34,3 % |
| Chlorid-Gehalt (ppm) | 70 | 60 | 180 | 80 | 64 |

1) 50 %ige Lösung von Surfynol (Fa. Air Products) in Butylglykol.

4. Herstellung einer grauen Pigmentpaste

27,81 Teile Bisphenol-A-diglycidylether, 1,44 Teile Xylol und 5,81 Teile Bisphenol A werden in Gegenwart von 0,002 Teilen Triphenylphosphin bei 150 - 160°C bis zu einem EEW von 345 umgesetzt.

Der Ansatz wird dann mit 21,61 Teilen Butylglykol verdünnt und auf 49°C gekühlt. Dann wird eine Mischung aus 7,77 Teilen 9-Amino-3.6-dioxanonan-1-ol und 4,07 Teilen N,N-Dimethylaminopropylamin innerhalb 6 min. zugegeben, worauf die Temperatur auf 110°C steigt. Man hält die Mischung 1 Std. lang zwischen 110 und 115°C bevor 6,45 Teile Butylglykol zugegeben werden und der Ansatz auf 77°C gekühlt wird. Anschließend werden 14,9 Teile Nonylphenolglycidylether zugegeben. Die Temperatur steigt daraufhin auf 90°C an und wird dort 1 Std. gehalten, bevor mit 10,03 Teilen Butylglykol verdünnt und gekühlt wird. Der Feststoffgehalt der dünnflüssigen Harzlösung liegt bei 60 %.

Zur Herstellung der Pigmentpaste werden zunächst 29,33 Teile Wasser, 1,59 Teile Essigsäure (90 %ig) und 21,60 Teile der vorstehend beschriebenen Harzlösung vorgemischt. Nun werden 0,7 Teile Entschäumer (1), 0,5 Teile Ruß, 4,8 Teile basisches Bleipigment, 6,75 Teile Extender HEWP (2), 32,48 Teile Titandioxid (R 900) und 2,25 Teile Dibutylzinnoxid zugegeben, und die Mischung wird 30 min lang unter einem schnellaufenden Dissolverrührwerk vordispergiert. Anschließend wird die Mischung in einer Laborkleinmühle (Motor Mini Mill, Eiger Engineering Ltd. Great Britain) während 1 bis 1,5 Std. bis zu einer Hegmann-Feinheit von kleiner/gleich 12 dispergiert und mit weiterem Wasser auf die gewünschte Verarbeitungsviskosität eingestellt.

Es resultiert eine sehr entmischungsstabile Pigmentpaste.

(1) "Tristar Antifoam",Tristar Chemical Co., Dallas, USA
(2) English China Clay Int. Great Britain

## 5. Zubereitung wäßriger Elektrotauchlacke, Abscheidung und Prüfung von Lackfilmen

Es werden jeweils 1925 Teile der in Tabelle 1 aufgeführten wässrigen Bindemitteldispersionen mit 2500 Teilen entionisiertem Wasser und 2 Teilen 30-%iger Milchsäure verdünnt. In die so verdünnten Bindemitteldispersionen werden dann jeweils 573 Teile der unter Punkt 4 beschriebenen Pigmentpaste eingerührt. Der Festkörper der Bäder liegt bei 20 %.

Man läßt die Elektrotauchlacke 5 Tage bei Raumtemperatur unter Rühren altern. Die Abscheidung der Lackfilme erfolgt während 2 Min. bei der angegebenen Spannung auf kathodisch geschalteten zinkphosphatierten Stahlprüftafeln sowie auf kathodisch geschalteten nicht vorbehandelten Stahltafeln. Die Badtemperatur wird hierbei auf 25°C gehalten. Die abgeschiedenen Naßfilme werden mit entionisiertem Wasser nachgespült und während 20 Min. bei 165°C eingebrannt.

Die so erhaltenen Lackfilme werden auf Vernetzung und Verlauf geprüft. Die Ergebnisse sind in Tabelle 2 zusammengefaßt.

Tabelle 2: Prüfung der eingebrannten Lackfilme

| Bad | 1 | 2 | 3 (Vergleich 1) | 4 (Vergleich 2) | 5 |
|---|---|---|---|---|---|
| Dispersion | 1 | 2 | 3 | 4 | 5 |
| Abscheidespannung [Volt] | 200 | 200 | 250 | 250 | 250 |
| Schichtdicke [/um] | 24 | 27 | 18 | 16 | 24 |
| Vernetzung 1) [Note] | 1 | 1 | 3 | 4 | 1 |
| Verlauf2) [Note] | 1 | 1 | 4 | 4 | 2 |

1) Beurteilung durch 20-maliges Hin- und Herreiben mit einem acetongetränkten Wattebausch, 1 = bester Wert, 5 = schlechtester Wert

2) 1 = bester Wert, 5 = schlechtester Wert

**Patentansprüche**

1. Verfahren zum Beschichten elektrisch leitfähiger Substrate, bei dem
   (1) das elektrisch leitfähige Substrat in einen wäßrigen Elektrotauchlack getaucht wird

(2) das Substrat als Kathode geschaltet wird

(3) durch Gleichstrom ein Film auf dem Substrat abgeschieden wird

(4) das beschichtete Substrat aus dem Elektrotauchlack entfernt wird und

(5) der abgeschiedene Lackfilm eingebrannt wird,

dadurch gekennzeichnet, daß der wäßrige Elektrotauchlack ein Vernetzungsmittel enthält, das erhältlich ist, indem

(I) in einer ersten Stufe

(a) Diphenylmethandiisocyanat und

(b) ein Monoalkohol oder eine Mischung aus Monoalkoholen

zu einem isocyanatgruppenhaltigen Zwischenprodukt (A) umgesetzt werden und dieses Zwischenprodukt (A)

(II) in einer zweiten Stufe mit

(c) einem Polyol oder einer Mischung aus Polyolen

zu einem hydroxylgruppenhaltigen Zwischenprodukt (B) umgesetzt wird, das

(III) in einer dritten Stufe entweder mit

(d) einem cycloaliphatischen, aliphatischen oder araliphatischen Polyisocyanat oder einem Gemisch aus solchen Polyisocyanaten und

(e) einem monofunktionellen Blockierungsmittel oder einem Gemisch solcher Blockierungsmittel oder mit

(f) einem aus (d) und (e) hergestellten teilblockierten Polyisocyanat

zu einem isocyanatgruppenfreien Vernetzungsmittel umgesetzt wird.

2. Wäßrige Lacke, enthaltend ein Vernetzungsmittel, das erhältlich ist, indem

(I) in einer ersten Stufe

(a) Diphenylmethandiisocyanat und

(b) ein Monoalkohol oder eine Mischung aus Monoalkoholen

zu einem isocyanatgruppenhaltigen Zwischenprodukt (A) umgesetzt werden und dieses Zwischenprodukt (A)

(II) in einer zweiten Stufe mit

(c) einem Polyol oder einer Mischung aus Polyolen

zu einem hydroxylgruppenhaltigen Zwischenprodukt (B) umgesetzt wird, das

(III) in einer dritten Stufe entweder mit

(d) einem cycloaliphatischen, aliphatischen oder araliphatischen Polyisocyanat oder einem Gemisch aus solchen Polyisocyanaten und

(e) einem monofunktionellen Blockierungsmittel oder einem Gemisch solcher Blockierungsmittel oder mit

(f) einem aus (d) und (e) hergestellten teilblockierten Polyisocyanat

zu einem isocyanatgruppenfreien Vernetzungsmittel umgesetzt wird.

3. Blockierte NCO-Gruppen enthaltende Vernetzungsmittel, dadurch gekennzeichnet, daß sie erhältlich sind, indem

(I) in einer ersten Stufe

(a) Diphenylmethandiisocyanat und

(b) ein Monoalkohol oder eine Mischung aus Monoalkoholen

zu einem isocyanatgruppenhaltigen Zwischenprodukt (A) umgesetzt werden und dieses Zwischenprodukt (A)

(II) in einer zweiten Stufe mit

(c) einem Polyol oder einer Mischung aus Polyolen

zu einem hydroxylgruppenhaltigen Zwischenprodukt (B) umgesetzt wird, das

(III) in einer dritten Stufe entweder mit

(d) einem cycloaliphatischen, aliphatischen oder araliphatischen Polyisocyanat oder einem Gemisch aus solchen Polyisocyanaten und

(e) einem monofunktionellen Blockierungsmittel oder einem Gemisch solcher Blockierungsmittel oder mit

(f) einem aus (d) und (e) hergestellten teilblockierten Polyisocyanat

zu einem isocyanatgruppenfreien Vernetzungsmittel umgesetzt wird.

4.  Verfahren, Lacke oder Vernetzungsmittel nach einem der Ansprüche 1 bis 3, dadurch gekennzeichnet, daß in der ersten Stufe 30 bis 95, vorzugsweise 50 bis 90 Prozent der NCO-Gruppen der Komponente (a) mit der Komponente (b) blockiert werden.

5.  Verfahren, Lacke oder Vernetzungsmittel nach einem der Ansprüche 1 bis 4, dadurch gekennzeichnet, daß als Komponente (b) Glykolether der allgmeinen Formel $CH_3(CH_2)_n$-0-$(CH_2$-$CH_2$-0-$)_m$H oder Mischungen aus derartigen Glykolethern eingesetzt werden, wobei n für eine ganze Zahl von 0 bis 5, vorzugsweise 2 bis 5 und m für eine ganze Zahl von 1 bis 3, vorzugsweise 1 oder 2 steht.

6.  Verfahren, Lacke oder Vernetzungsmittel nach einem der Ansprüche 1 bis 5, dadurch gekennzeichnet, daß als Komponente (c) ein Triol oder eine Mischung aus Triolen eingesetzt wird.

7.  Verfahren, Lacke oder Vernetzungsmittel nach einem der Ansprüche 1 bis 6, dadurch gekennzeichnet, daß in der zweiten Stufe pro Äquivalent freie NCO-Gruppen 1,0 bis 2,5, vorzugsweise 1,2 bis 1,8 Äquivalente Hydroxylgruppen eingesetzt werden.

8.  Verfahren, Lacke oder Vernetzungsmittel nach einem der Ansprüche 1 bis 7, dadurch gekennzeichnet, daß als Komponente (d) das Isocyanurat des Hexamethylendiisocyanats-1,6 eingesetzt wird.

9.  Verfahren, Lacke oder Vernetzungsmittel nach einem der Ansprüche 1 bis 8, dadurch gekennzeichnet, daß als Komponente (e) ein sekundäres Monoamin, ein Ketoxim oder eine Mischung aus sekundären Monoaminen und/oder Ketoximen eingesetzt wird.

10. Verfahren, Lacke oder Vernetzungsmittel nach einem der Ansprüche 1 bis 9, dadurch gekennzeichnet, daß mindestens 10 Prozent der im Zwischenprodukt (B) enthaltenen Hydroxylgruppen mit einer Isocyanatgruppe der Komponente (d) bzw. (f) umgesetzt werden.

**Claims**

1.  Process for coating electrically conductive substrates, in which
    (1) the electrically conductive substrate is dipped into a water-based electro-dipping primer
    (2) the substrate is connected as the cathode
    (3) a film is deposited on the substrate by means of direct current
    (4) the coated substrate is removed from the electro-dipping primer and
    (5) the deposited film coating is baked,
    characterized in that the water-based electro-dipping primer contains a crosslinking agent which can be obtained by
    (I) reacting, in a first stage,
        (a) diphenylmethane diisocyanate and
        (b) a monoalcohol or a mixture of monoalcohols
    to give an intermediate product (A) containing isocyanate groups, and
    (II) reacting this intermediate product (A) in a second stage with
        (c) a polyol or a mixture of polyols
    to give an intermediate product (B) containing hydroxyl groups which
    (III) is reacted in a third stage either with
        (d) a cycloaliphatic, aliphatic or araliphatic polyisocyanate or a mixture of such polyisocyanates and
        (e) a monofunctional masking agent or a mixture of such masking agents or with
        (f) a partially-masked polyisocyanate prepared from (d) and (e)
    to give a crosslinking agent which is free from isocyanate groups.

2.  Water-based coating containing a crosslinking agent which can be obtained by
    (I) reacting, in a first stage,
        (a) diphenylmethane diisocyanate and
        (b) a monoalcohol or a mixture of monoalcohols
    to give an intermediate product (A) containing isocyanate groups, and
    (II) reacting this intermediate product (A) in a second stage with

(c) a polyol or a mixture of polyols

to give an intermediate product (B) containing hydroxyl groups which

(III) is reacted in a third stage either with

(d) a cycloaliphatic, aliphatic or araliphatic polyisocyanate or a mixture of such polyisocyanates and

(e) a monofunctional masking agent or a mixture of such masking agents or with

(f) a partially-masked polyisocyanate prepared from (d) and (e)

to give a crosslinking agent which is free from isocyanate groups.

3. Crosslinking agent which contains masked NCO groups, characterized in that it can be obtained by

(I) reacting, in a first stage,

(a) diphenylmethane diisocyanate and

(b) a monoalcohol or a mixture of monoalcohols

to give an intermediate product (A) containing isocyanate groups, and

(II) reacting this intermediate product (A) in a second stage with

(c) a polyol or a mixture of polyols

to give an intermediate product (B) containing hydroxyl groups which

(III) is reacted in a third stage either with

(d) a cycloaliphatic, aliphatic or araliphatic polyisocyanate or a mixture of such polyisocyanates and

(e) a monofunctional masking agent or a mixture of such masking agents or with

(f) a partially-masked polyisocyanate prepared from (d) and (e)

to give a crosslinking agent which is free from isocyanate groups.

4. Process, coating or crosslinking agent according to any of Claims 1 to 3, characterized in that, in the first stage, 30 to 95, preferably 50 to 90, percent of the NCO groups of the component (a) are masked by the component (b).

5. Process, coating or crosslinking agent according to any of Claims 1 to 4, characterized in that glycol ethers of the general formula $CH_3(CH_2)_n$-O-$(CH_2$-$CH_2$-O-$)_m$H or mixtures of glycol ethers of this type are employed as the component (b), n being an integer from 0 to 5, preferably 2 to 5, and m being an integer from 1 to 3, preferably 1 or 2.

6. Process, coating or crosslinking agent according to any of Claims 1 to 5, characterized in that a triol or a mixture of triols is employed as the component (c).

7. Process, coating or crosslinking agent according to any of Claims 1 to 6, characterized in that, in the second stage, 1.0 to 2.5, preferably 1.2 to 1.8, equivalents of hydroxyl groups are employed per equivalent of free NCO groups.

8. Process, coating or crosslinking agent according to any of Claims 1 to 7, characterized in that the isocyanurate of hexamethylene 1,6-diisocyanate is employed as the component (d).

9. Process, coating or crosslinking agent according to any of Claims 1 to 8, characterized in that a secondary monoamine, a ketoxime or a mixture of secondary monoamines and/or ketoximes is employed as the component (e).

10. Process, coating or crosslinking agent according to any of Claims 1 to 9, characterized in that at least 10 percent of the hydroxyl groups present in the intermediate product (B) are reacted with an isocyanate group of the component (d) or (f).

**Revendications**

1. Procédé de revêtement de substrats conducteurs de l'électricité, dans lequel

(1) le substrat conducteur de l'électricité est trempé dans un primaire d'électrodéposition à base d'eau

(2) le substrat est raccordé en tant que cathode

(3) un feuil est déposé sur le substrat au moyen d'un courant continu

(4) le substrat revêtu est retiré du primaire d'électrodéposition et

(5) le feuil déposé est cuit,

caractérisé en ce que le primaire d'électrodéposition à base d'eau contient un agent de réticulation que l'on peut obtenir

(I) en faisant réagir, dans une première étape,

    (a) du diphénylméthane diisocyanate et

    (b) un monoalcool ou un mélange de monoalcools,

pour obtenir un produit intermédiaire (A) contenant des groupes isocyanate, et

(II) en faisant réagir ce produit intermédiaire (A), dans une seconde étape, avec

    (c) un polyol ou un mélange de polyols

pour obtenir un produit intermédiaire (B) contenant des groupes hydroxyle, que l'on fait réagir

(III) dans une troisième étape, avec

    (d) un polyisocyanate cycloaliphatique, aliphatique ou arylaliphatique, ou un mélange de tels polyisocyanates, et

    (e) un agent de blocage monofonctionnel ou un mélange de tels agents de blocage, ou bien avec

    (f) un polyisocyanate partiellement bloqué, préparé à partir de (d) et de (e)

pour obtenir un agent de réticulation ne contenant pas de groupes isocyanate.

2. Revêtement à base d'eau contenant un agent de réticulation que l'on peut obtenir

(I) en faisant réagir, dans une première étape,

    (a) du diphénylméthane diisocyanate et

    (b) un monoalcool ou un mélange de monoalcools,

pour obtenir un produit intermédiaire (A) contenant des groupes isocyanate, et

(II) en faisant réagir ce produit intermédiaire (A), dans une seconde étape, avec

    (c) un polyol ou un mélange de polyols pour obtenir un produit intermédiaire (B) contenant des groupes hydroxyle, que l'on fait réagir

(III) dans une troisième étape, avec

    (d) un polyisocyanate cycloaliphatique, aliphatique ou arylaliphatique, ou un mélange de tels polyisocyanates, et

    (e) un agent de blocage monofonctionnel ou un mélange de tels agents de blocage, ou bien avec

    (f) un polyisocyanate partiellement bloqué, préparé à partir de (d) et de (e)

pour obtenir un agent de réticulation ne contenant pas de groupes isocyanate.

3. Agent de réticulation qui contient des groupes NCO bloqués, caractérisé en ce que l'on peut l'obtenir

(I) en faisant réagir, dans une première étape,

    (a) du diphénylméthane diisocyanate et

    (b) un monoalcool ou un mélange de monoalcools,

pour obtenir un produit intermédiaire (A) contenant des groupes isocyanate, et

(II) en faisant réagir ce produit intermédiaire (A), dans une seconde étape, avec

    (c) un polyol ou un mélange de polyols pour obtenir un produit intermédiaire (B) contenant des groupes hydroxyle, que l'on fait réagir

(III) dans une troisième étape, avec

    (d) un polyisocyanate cycloaliphatique, aliphatique ou arylaliphatique, ou un mélange de tels polyisocyanates, et

    (e) un agent de blocage monofonctionnel ou un mélange de tels agents de blocage, ou bien avec

    (f) un polyisocyanate partiellement bloqué, préparé à partir de (d) et de (e)

pour obtenir un agent de réticulation ne contenant pas de groupes isocyanate.

4. Procédé, agent de revêtement ou agent de réticulation selon l'une quelconque des revendications 1 à 3, caractérisé en ce que, dans la première étape, 30 à 95, de préférence 50 à 90, pour-cent des groupes NCO du constituant (a) sont bloqués par le constituant (b).

5. Procédé, agent de revêtement ou agent de réticulation selon l'une quelconque des revendications 1 à 4, caractérisé en ce que l'on emploie, comme constituant (b), des éthers de glycol de formule générale $CH_3(CH_2)_n$-O-$(CH_2$-$CH_2$-O$)_m$H, ou des mélanges d'éthers de glycol de ce type, n étant un nombre entier de 0 à 5, de préférence de 2 à 5, et m étant un nombre entier de 1 à 3, de préférence 1 ou 2.

6.  Procédé, agent de revêtement ou agent de réticulation selon l'une quelconque des revendications 1 à 5, caractérisé en ce que l'on emploie, comme constituant (c), un triol ou un mélange de triols.

7.  Procédé, agent de revêtement ou agent de réticulation selon l'une quelconque des revendications 1 à 6, caractérisé en ce que l'on emploie, dans la seconde étape, 1,0 à 2,5, de préférence 1,2 à 1,8, équivalents de groupes hydroxyle par équivalent de groupes NCO libres.

8.  Procédé, agent de revêtement ou agent de réticulation selon l'une quelconque des revendications 1 à 7, caractérisé en ce que l'on emploie, comme constituant (d), de l'isocyanurate d'hexaméthylène 1,6-diisocyanate.

9.  Procédé, agent de revêtement ou agent de réticulation selon l'une quelconque des revendications 1 à 8, caractérisé en ce que l'on emploie, comme constituant (e), une monoamine secondaire, une cétoxime ou un mélange de monoamines secondaires et/ou de cétoximes.

10. Procédé, agent de revêtement ou agent de réticulation selon l'une quelconque des revendications 1 à 9, caractérisé en ce que l'on fait réagir au moins 10 pourcent des groupes hydroxyle présents dans le produit intermédiaire (B) avec un groupe isocyanate du constituant (d) ou (f).